# EUROPÄISCHE PATENTANMELDUNG

(11) **EP 1 243 304 A2**
(43) Veröffentlichungstag der Anmeldung: **25.09.2002**
(21) Anmeldenummer: 02003765.1
(22) Anmeldetag: 20.02.2002
(51) Int. Cl.: B01D 45/08, B01D 45/06

(54) **Filtervorrichtung mit rauher Oberflächenstruktur**

(30) Priorität: 21.03.2001 DE 10113743
(71) Anmelder: Pakufix Fertigungs- und Vertriebs GmbH, 92369 Sengenthal (DE)
(72) Erfinder: Zöllner, Thorsten, 92369 Buchberg-Sengenthal (DE)
(74) Vertreter: Hübner, Gerd, Dipl.-Phys.

(57) **Zusammenfassung**

Bei einer Filtervorrichtung (1) für durch klebrige Substanzen verunreinigte Gase oder Gasgemische (3), umfassend ein Gehäuse (2) mit einer Einströmöffnung (14) und einer Ausströmöffnung (15) sowie in dem Gehäuse (2) angeordnete Filterelemente (18) ist vorgesehen, daß die Filterelemente (18) als Strömungsleitelemente ausgebildet und zur Abscheidung der klebrigen Substanzen mit einer rauhen Oberflächenstruktur versehen sind. Aufgrund dieser Ausgestaltung ist die Standzeit dieser Filtervorrichtung (1) im Vergleich zu herkömmlichen Filtervorrichtungen erheblich verlängert.

## Beschreibung

Die Erfindung betrifft eine Filtervorrichtung für durch klebrige Substanzen verunreinigte Gase oder Gasgemische gemäß dem Oberbegriff von Anspruch 1.

Zur Filtration von durch störende Substanzen verunreinigten Gasen oder Gasgemischen werden vorwiegend Gewebefilter aus Textil- und Kunstfasergeweben oder Glasfibermatten eingesetzt. Diese Filtervorrichtungen sind meistens als Schlauch- oder Taschenfilter im Einsatz. Schlauchfilter können von innen nach außen oder bei einem durch ein Gerippe gestützten Schlauch von außen nach innen durchströmt werden. Die Gewebefilter halten dabei die Substanzen bzw. Partikel eines Gasstromes zurück. Nach einer gewissen Zeit muß aufgrund von Ablagerungen der Gewebefilter durch Rückspülen mit Druckstößen gereinigt werden. Oft ist auch ein Austausch der Gewebefilter vorgesehen.

Diese bekannten Filtervorrichtungen weisen im Zusammenhang mit der Reinigung aerosol-, ölhaltiger oder dergleichen mit klebrigen, viskosen Substanzen verunreinigter Luft den Nachteil auf, daß durch die Ablagerung dieser Substanzen oder Partikel in dem Gewebefilter dieser sich sehr schnell zusetzt, der spezifische Filterwiderstand zunimmt und dadurch der Gesamtgasdurchsatz rasch sinkt. Eine Reinigung der Gewebefilter ist bei klebrigen Substanzen kaum möglich und ein Austausch der Gewebefilter ist aufgrund der Demontage-, Montage- und Materialausgaben sehr kostenaufwendig.

Hiervon ausgehend liegt der Erfindung die Aufgabe zugrunde, eine Filtervorrichtung zu schaffen, bei der die Reinigungsintervalle erheblich verlängert sind und ein Austausch der Filterelemente nicht erforderlich ist.

Diese Aufgabe wird gemäß dem kennzeichnenden Teil von Anspruch 1 gelöst. Der Kern der Erfindung liegt dabei darin, daß die klebrigen Substanzen sich auf einer rauhen Oberflächenstruktur der Filterelemente abscheiden, wobei der Gasstrom durch die als Strömungsleitelemente ausgebildeten Filterelemente daran entlang geleitet wird. Im Gegensatz zum Stand der Technik wird der zu reinigende Gasstrom also nicht durch irgendwelche engen Kanäle hindurchgepreßt, an denen die auszusondernden Partikel quasi ausgesiebt werden. Es hat sich vielmehr gezeigt, daß ein Vorbeiströmen des verunreinigten Gases oder Gasgemisches an einer aufgerauhten Oberflächenstruktur zu einem Abscheiden von viskosen oder aerosolen Partikeln, wie z.B. Esterverunreinigungen, führt. Da zwischen diesen Strömungsleitelementen ein großer freier Öffnungsquerschnitt verbleiben kann, führt dieses Absetzen der zurückzuhaltenden Teilchen nur sehr langsam zu einer signifikanten Absenkung des Strömungsquerschnitts.

Die Filtervorrichtung ist aufgrund seiner Eigenschaften insbesondere als Vorfilter für bekannte Filteranlagen vorgesehen, in denen dann die eigentliche Reinigung von Lösemitteldämpfen oder dergleichen Substanzen erfolg.

Weitere vorteilhafte Ausgestaltungen der Erfindung geben die Unteransprüche an.

Nachfolgend wird die Erfindung anhand eines bevorzugten Ausführungsbeispiels in Verbindung mit der Zeichnung näher beschrieben. Dabei zeigen:

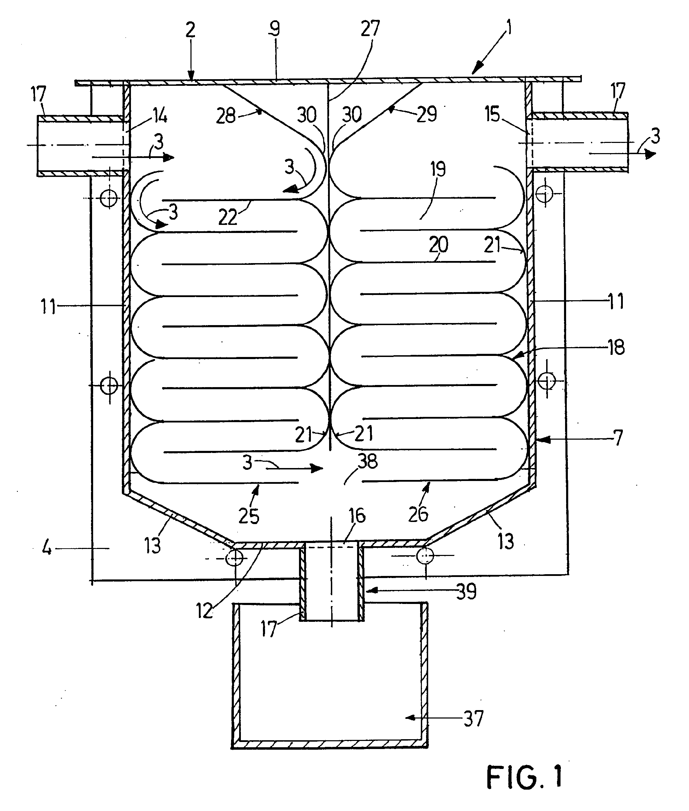

- Fig. 1: einen schematischen Schnitt einer Filtervorrichtung,
- Fig. 2: eine Seitenansicht eines Filterelements,
- Fig. 3: eine Aufsicht auf das in Fig. 2 dargestellte Filterelement und
- Fig. 4: einen vergrößerten Teilschnitt durch ein solches Filterelement.

Eine Filtervorrichtung 1 für durch klebrige Substanzen verunreinigte Gase oder Gasgemische 3 weist ein Gehäuse 2 auf. Das Gehäuse 2 umfaßt zwei rechteckige Platten 4, die die Vorder- bzw. die Rückseite des Gehäuses 2 bilden und einen zwischen den Platten 4 angeordneten, im Querschnitt etwa U-förmigen Rahmen 7. Die vordere der Platten 4 ist in den Figuren nicht dargestellt. Der einstückig ausgebildete Rahmen 7 umfaßt zwei U-Schenkel 11, einen U-Boden 12 sowie zwei zwischen den U-Schenkeln 11 und dem U-Boden 12 angeordnete Übergangselemente 13. Die Übergangselemente 13 verlaufen schräg, so daß der U-Boden 12 die tiefste Stelle des Rahmens 7 bildet. Das Gehäuse 2 umfaßt des weiteren einen Deckel 9, der den Rahmen 7 nach oben abschließt.

Die beiden U-Schenkel 11 sind jeweils am oberen Ende mit einer seitlichen Einströmöffnung 14 und Ausströmöffnung 15 versehen, die beide auf einer Höhe gegenüberliegend plaziert sind. Am U-Boden 12 des Rahmens 7 ist des weiteren eine Ablauföffnung 16 positioniert. An den Öffnungen 14, 15, 16 sind jeweils auf der Außenseite des Rahmens 7 Rohrabschnitte 17 angeordnet.

Der Rahmen 7 umfaßt in seinem Innenraum Filterelemente 18 aus Edelstahl oder Aluminium, die des weiteren auch als Strömungsleitelemente fungieren.

Die Filterelemente 18 bilden einen mäanderförmigen Strömungskanal 19 für das zu reinigende Gas oder Gasgemisch 3. Sie weisen jeweils einen langen, geraden Leitabschnitt 20 und einen Umlenkbogen 21 auf, wobei die Filterelemente 18 einstückig als Stanzblechteil ausgebildet sind. Der Umlenkbogen 21 ist halbkreisförmig ausgestaltet. Die Unterseite 22 der Filterelemente 18 ist mit den freien Bogenenden 23 von darunter angeordneten Filterelementen 18 an der Übergangsstelle 24 des geraden Leitabschnitts 20 zu dem Umlenkbogen 21 verbunden, wodurch der mäanderförmige Strömungskanal 19 geschaffen ist. Die Leitabschnitte 20 sind in dem Rahmen 7 horizontal orientiert.

Der Strömungskanal 19 umfaßt zwei solcher mäanderförmiger, nebeneinander angeordneter Strömungskanalabschnitte 25, 26. Zwischen den beiden Strömungskanalabschnitten 25, 26 ist eine senkrechte Platte 27 zur Stabilisierung und Trennung vorgesehen, die sich vom Deckel 9 bis zu dem untersten Umlenkbogen 21 der Strömungskanalabschnitte 25, 26 erstreckt. Die Filterelemente 18 sind mit der Außenseite ihrer Umlenkbögen 21 an der Platte 27 bzw. an der Innenseite des Rahmens 7 befestigt. Die obersten Filterelemente 18 der beiden Strömungskanalabschnitte 25, 26 sind als Eingangsfilterelement 28 bzw. als Ausgangsfilterelement 29 ausgebildet. Sie weisen beide jeweils zwei der geraden Leitabschnitte 20 und einen zwischen ihnen angeordneten Umlenkbogen 30 auf, wobei der Umlenkbogen 30 so ausgestaltet ist, daß die beiden geraden Leitabschnitte 20 etwa V-förmig verlaufen. Die Filterelemente 28, 29 grenzen mit ihrem Umlenkbogen 30 an die Platte 27 an und befinden sich auf der Höhe der Öffnungen 14, 15. Der nach oben verlaufende Leitabschnitt 20 berührt den Deckel 9.

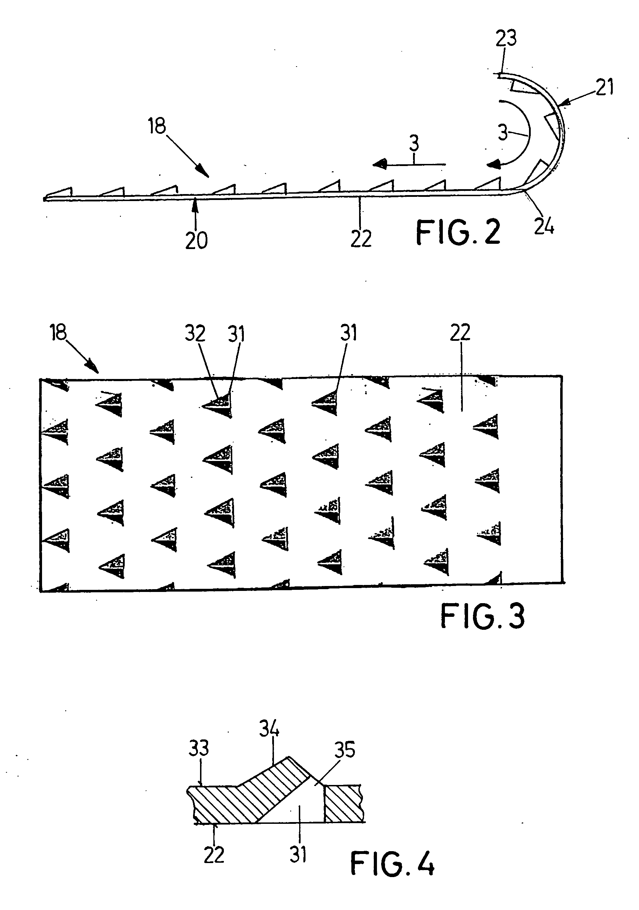

Die Filterelemente 18 weisen an ihrer Unterseite 22 eingestanzte Vertiefungen 31 mit einer dreieckförmigen Grundfläche 32 auf, wodurch auf der Oberseite 33 korrespondierende Erhebungen 34 mit Durchgängen 35 geschaffen sind (Fig. 4). Die Umlenkbögen 21, 30 sind ebenfalls mit den Vertiefungen 31 bzw. den Erhebungen 34 auf ihrer Innenseite versehen. Die Erhebungen 34 sind im Längsschnitt etwa dreieckförmig ausgestaltet und weisen auf der dem Umlenkbogen 21, 30 zugewandten Fläche den Durchgang 35 auf. Aus fertigungstechnischen Gründen nimmt der Durchgang 35 von der Unterseite 22 bis zu der Oberseite 33 in seiner Querschnittsfläche allmählich ab. Die Durchgänge 35 weisen je nach Anwendung Öffnungsweiten von 0,1 mm bis 5 mm und vorzugsweise von 0,4 mm bis 2 mm auf. Die Erhebungen 34 bzw. die Vertiefungen 31 sind auf den Filterelementen 18 in versetzten Längsreihen angeordnet. Die Filterelemente 18 sind so in dem Rahmen 7 installiert, daß die Erhebungen 34 - außer bei den Umlenkbögen 21, 30 - stets dem Deckel 9 zugewandt sind.

Wie in den Zeichnungen nicht dargestellt ist, können die Filterelemente 18 auch als strukturiertes Drahtgewebe oder Streckgitter ausgebildet sein.

An der Verbindungsstelle zwischen beiden Strömungskanalabschnitten 25, 26 weist der Strömungskanal 19 bei seinen untersten Leitabschnitten 20 eine Ausnehmung 38 auf, durch die etwaiges Kondensat, das im Strömungskanal 19 sich absetzt und nach unten läuft, in die Ablauföffnung 16 gelangen kann.

Die Filtration der durch klebrige Substanzen verunreinigten Gase oder Gasgemische 3 erfolgt, indem es aufgrund eines nicht dargestellten Gebläses durch die Filtervorrichtung 1 geblasen bzw. gesaugt wird. Aufgrund der mäanderförmigen Ausgestaltung des Strömungskanals 19 durch die Filterelemente 18 wird erreicht, daß das Gas bzw. das Gasgemisch 3 stets entlang der mit Erhebungen 34 versehenen Oberseite 33 der Filterelemente 18 laminar strömt. Das Gas bzw. das Gasgemisch 3 weist dabei an der Oberseite 33 die maximale Geschwindigkeit in der Strömung auf. Durch die Erhebungen 34 ist eine rauhe Oberflächenstruktur geschaffen, so daß die klebrigen Substanzen in dem Gas bzw. dem Gasgemisch 3 sich an der Oberseite 33 der Filterelemente 18 abscheiden. In dem Strömungskanalabschnitt 25 wird das Gas bzw. das Gasgemisch 3 zu dem U-Boden 12 des Rahmens 7 geleitet und dann anschließend über den Strömungskanalabschnitt 26 zu der Ausströmöffnung 15. Aufgrund der geringen Öffnungsweiten strömt das Gas bzw. das Gasgemisch nicht nennenswert durch die Durchgänge 35.

Kondensflüssigkeit, die sich aufgrund der im Vergleich mit dem Gas oder Gasgemisch 3 niedrigeren Temperatur der Filterelemente 18 bildet, kann allerdings durch die Durchgänge 35 abtropfen. Da die Ablauföffnung 16 an der tiefsten Stelle des Rahmens 7, also im U-Boden 12, angeordnet ist, wird die Kondensflüssigkeit in einem unter der Ablauföffnung 16 plazierten Behälter 37 gesammelt werden. Die Ablauföffnung 16, der Rohrabschnitt 17 und der Behälter 37 bilden dabei einen Ablauf 39.

Da die Filtervorrichtung 1 für durch klebrige Substanzen verunreinigte Gase oder Gasgemische 3 vorgesehen ist, lagern sich die Substanzen auch auf einer auf der Oberseite 33 abgeschiedenen Substanzschicht an. Die Standzeiten sind im Vergleich zu bekannten Filtervorrichtungen erheblich verlängert. Ein Austausch der Filtermittel bzw. Filterelemente 18 ist ebenfalls nicht notwendig, wodurch die Betriebskosten erheblich gesenkt werden. Eine Reinigung der Filtervorrichtung 1 ist entweder mechanisch, mit Lösungsmitteln oder durch Ultraschall möglich.

## Patentansprüche

1. Filtervorrichtung für durch klebrige Substanzen verunreinigte Gase oder Gasgemische (3), umfassend ein Gehäuse (2) mit einer Einströmöffnung (14) und einer Ausströmöffnung (15) sowie in dem Gehäuse (2) angeordnete Filterelemente (18), **dadurch gekennzeichnet, daß** die Filterelemente (18) als Strömungsleitelemente ausgebildet und zur Abscheidung der klebrigen Substanzen mit einer rauhen Oberflächenstruktur versehen sind.

2. Filtervorrichtung gemäß Anspruch 1, **dadurch gekennzeichnet, daß** die Filterelemente (18) einen mäanderförmigen Strömungskanal (19) für das zu reinigende Gas oder Gasgemisch (3) bilden.

3. Filtervorrichtung nach Anspruch 2, **dadurch gekennzeichnet, daß** die Filterelemente (18) jeweils einen langen, geraden Leitabschnitt (20) und einen Umlenkbogen (21, 30) umfassen, wobei der gerade Leitabschnitt (20) und der Umlenkbogen (21, 30) einstückig ausgebildet sind.

4. Filtervorrichtung nach Anspruch 3, **dadurch gekennzeichnet, daß** die Unterseite (22) des Filterelements (18) mit dem freien Bogenende (23) an der Übergangsstelle (24) des geraden Leitabschnitts (20) zu dem Umlenkbogen (21, 30) verbunden ist.

5. Filtervorrichtung nach den Ansprüchen 2 bis 4, **dadurch gekennzeichnet, daß** der Strömungskanal (19) zwei mäanderförmige nebeneinander angeordnete Strömungskanalabschnitte (25, 26) umfaßt.

6. Filtervorrichtung nach Anspruch 1, **dadurch gekennzeichnet, daß** die Filterelemente (18) als jeweils strukturiertes Stanzblechteil, Drahtgewebe oder Streckgitter ausgebildet sind.

7. Filtervorrichtung nach Anspruch 1, **dadurch gekennzeichnet, daß** die Filterelemente (18) an der Unterseite (22) eingestanzte Vertiefungen (31) aufweisen, wodurch auf der strömungsseitigen Oberseite (33) korrespondierende Erhebungen (34) mit Durchgängen (35) gebildet sind.

8. Filtervorrichtung nach Anspruch 7, **dadurch gekennzeichnet, daß** die Vertiefungen (31) eine dreieckförmige Grundfläche (32) aufweisen.

9. Filtervorrichtung nach Anspruch 1, **dadurch gekennzeichnet, daß** die Filtervorrichtung (1) einen Ablauf (39) am Boden (12) des Gehäuses (2) umfaßt.

10. Filtervorrichtung nach Anspruch 2, **dadurch gekennzeichnet, daß** das Eingangsfilterelement (28) und das Ausgangsfilterelement (29) jeweils zwei gerade Leitabschnitte (20) und einen Umlenkbogen (30) umfassen, wobei der Umlenkbogen (30) zwischen den beiden geraden Leitabschnitten (20) angeordnet ist, so daß sowohl das Eingangsfilterelement (28) als auch das Ausgangsfilterelement (29) etwa V-förmig ausgestaltet sind.
